# EUROPÄISCHE PATENTSCHRIFT

(11) **EP 1 456 540 B1**
(45) Veröffentlichungstag und Bekanntmachung des Hinweises auf die Patenterteilung: **28.06.2006**
(21) Anmeldenummer: 02792615.3
(22) Anmeldetag: 28.11.2002
(51) Int. Cl.: F04B 43/04

(54) **MEMBRANPUMPE MIT INTEGRIERTEM DRUCKSENSOR**
DIAPHRAGM PUMP COMPRISING AN INTEGRATED PRESSURE SENSOR
POMPE A MEMBRANE A CAPTEUR DE PRESSION INTEGRE

(30) Priorität: 12.12.2001 DE 10161132
(43) Veröffentlichungstag der Anmeldung: 15.09.2004
(73) Patentinhaber: Argillon GmbH, 96257 Redwitz (DE)
(72) Erfinder: WEIGL, Manfred, 93161 Sinzing (DE)
(74) Vertreter: Tergau & Pohl Patentanwälte
(86) Internationale Anmeldenummer: PCT/DE2002/004379
(87) Internationale Veröffentlichungsnummer: WO 2003/050416

(56) Entgegenhaltungen:
- WO-A-01/57488
- DE-C- 19 743 337
- JP-A- 2001 203 196
- US-A- 6 110 410

## Beschreibung

Die Erfindung betrifft eine Membranpumpe mit integriertem Drucksensor zum Erfassen des Druckes einer Reduktionsmittellösung für die Abgasnachbehandlung bei einer Brennkraftmaschine.

Die Verminderung der Stickoxidemission einer mit Luftüberschuss arbeitenden Brennkraftmaschine, insbesondere einer Diesel-Brennkraftmaschine kann mit Hilfe des SCR-Verfahrens (Selektive katalytische Reduktion) zu Stickstoff und Wasserdampf erfolgen. Als Reduktionsmittel werden entweder gasförmiges Ammoniak (NH₃), Ammoniak in wässeriger Lösung oder Harnstoff in wässeriger Lösung eingesetzt. Der Harnstoff dient dabei als Ammoniakträger und wird mit Hilfe eines Dosiersystems vor einem Hydrolysekatalysator in das Auspuffsystem eingespritzt, dort mittels Hydrolyse zu Ammoniak umgewandelt, der dann wiederum in dem eigentlichen SCR- oder DENOX-Katalysator die Stickoxide reduziert.

Ein solches Dosiersystem weist als wesentliche Komponenten einen Reduktionsmittelbehälter, eine Pumpe, einen Druckregler, einen Drucksensor, ein Dosierventil und die nötigen Verbindungsschläuche auf. Die Pumpe fördert das in dem Reduktionsmittelbehälter bevorratete Reduktionsmittel zu dem Dosierventil, mittels dessen das Reduktionsmittel in den Abgasstrom stromaufwärts des Hydrolysekatalysators eingespritzt wird. Das Dosierventil wird über Signale einer Steuereinrichtung derart angesteuert, dass abhängig von Betriebsparametern der Brennkraftmaschine eine bestimmte, aktuell nötige Menge an Reduktionsmittel zugeführt wird (DE 197 43 337 C1).

Es ist ein Vorteil der in wässerigen Lösungen vorliegenden ammoniakfreisetzenden Substanzen, wie z.B. Harnstoff, dass die Bevorratung, die Handhabung, die Förder- und Dosierbarkeit technisch relativ einfach zu lösen sind. Ein Nachteil dieser wässerigen Lösungen besteht darin, dass in Abhängigkeit der Konzentration der gelösten Substanz die Gefahr des Einfrierens bei bestimmten Temperaturen besteht.

32%ige Harnstofflösung, wie sie typischerweise in SCR-Systemen als Reduktionsmittel verwendet wird, weist einen Gefrierpunkt von -11° C auf. Dabei erhöht sich das Volumen ähnlich wie bei Wasser um ca. 10%. Diese Volumenzunahme wird hauptsächlich vom elastischen Reduktionsmittelschlauch kompensiert, d.h. durch die Elastizität des Systems wird der Druckanstieg begrenzt. Alle Komponenten des Systems welche Reduktionsmittel enthalten, müssen so konstruiert sein, dass die Volumenzunahme kompensiert werden kann oder bis zum vollständigen Einfrieren ein Druckabbau in Richtung Schlauch möglich ist. Letzteres erfordert eine hohe Überdruckfestigkeit und kleine Totvolumina der Komponenten. Beim Drucksensor ist die Druckfestigkeit prinzipiell durch die Drucksensormembran begrenzt. Je weiter der Berstdruck der Drucksensormembran über der oberen Messgrenze des Drucksensors liegt, umso niedriger ist die Sensorempfindlichkeit und damit die Messwertauflösung und Genauigkeit. Zum Schutz des Drucksensors in solchen Harnstoff-SCR-Systemen beim Einfrieren des Flüssigkeitsvolumens muss also sichergestellt werden, dass die Ausdehnung der Harnstofflösung beim Übergang in die feste Phase nicht zu einem unkontrollierten Druckanstieg im Dosiersystem führt. Insbesondere muss der Drucksensor geschützt werden, da dieser prinzipbedingt eine druckempfindliche Komponente darstellt.

In der WO 01/57488 A1 ist ein Drucksensor zum Erfassen des Druckes einer Flüssigkeit, insbesondere einer Reduktionsmittellösung beschrieben, der so aufgebaut ist, dass das einfrierende Reduktionsmittelvolumen unmittelbar an der Sensormembran und in der Verbindungsbohrung zum Reduktionsmitteldosiersystem den Sensor nicht zerstört. Hierzu ist das eine Drucksensormembran aufweisende Drucksensorelement in einem Aufnahmeteil mittels eines Federelementes während des Betriebes innerhalb eines zulässigen Arbeitsdruckbereiches in einer definierten Position gehalten. Bei Überschreiten des zulässigen Arbeitsdruckbereiches findet eine gegen die Federkraft wirkende Relativbewegung zwischen Drucksensorelement und Aufnahmeteil statt. Dadurch wird eine Volumenzunahme des unmittelbar vor der Drucksensormembran liegenden Raumes erreicht, wodurch eine Begrenzung des Druckes erzielt und ein wirksamer Schutz der Drucksensormembran bei eingefrorener Flüssigkeit erreicht wird.

Ein Druckanstieg im Gesamtsystem vor Einfrieren des Sensors kann wegen der geringen Pufferkapazität damit nicht verhindert werden. So kann es je nach Anwendung notwendig sein, dass zusätzliche Elemente wie federbelastete Membranen oder elastische Wandungen im Drucksystem vorgesehen werden müssen.

Einer der bevorzugten Pumpentypen für Reduktionsmitteldosiersysteme ist die Membranpumpe. Der Antrieb dieser Pumpe kann so ausgeführt werden, dass im Ansaugtakt ein Elektromagnet die Pumpenmembran gegen die Kraft einer Feder zurückzieht, und der Pump- bzw. Fördertakt von der Feder ausgeführt wird. Der Pumpzyklus wird von der Steuereinheit des Dosiersystems folgendermaßen vorgegeben:

Beim Systemstart wird der Elektromagnet über einen geeigneten Leistungsschalter mit einem Impuls von definierter Länge (abhängig von der momentan verfügbaren Versorgungsspannung) bestromt. Dadurch wird wie oben beschrieben ein Pumpzyklus bestehend aus Ansaug- und Fördertakt durchgeführt. Dieser Vorgang wird so oft wiederholt, bis ein vorgegebener Maximaldruck erreicht ist. Erneute Pumpzyklen werden erst wieder gestartet, wenn der Druck unterhalb ein vorgegebenes Minimum abgefallen ist. Für diese Art der elektronischen Druckregelung wird der Drucksensor benötigt. Bei dieser Art der Membranpumpe ist der Maximaldruck grundsätzlich durch die Federkraft vorgegeben. Da die Ruhestellung der Membran am Ende des Förderhubes ist, kann die Membran die Volumenzunahme des Reduktionsmittels in der Membranpumpe beim Einfrieren mit ihrem vollen Hubvolumen kompensieren und damit in der Membranpumpe begrenzen. Da alleine schon wegen der Optimierung der Ansaugleistung das Totvolumen in der Ruhestellung minimiert ist, kann im Pumpenkopf unter keinen Umständen ein Überdruck entstehen. Bei existierenden Systemen kann diese prinzipbedingte Druckspeicherfähigkeit der Pumpe zum Schutz des Drucksensors nicht genutzt werden, da das Pumpenauslassventil welches als einfaches Rückschlagventil ausgeführt ist, einen Druckausgleich in Richtung Pumpenmembran verhindert. Selbst bei einem speziellen Ventil welches gesteuert sein könnte oder mit Überdruckventil in Gegenrichtung ausgestattet sein könnte, kann bei bestimmten Temperaturverteilungen beim Einfrieren dieses Systems, kein zuverlässiger Druckausgleich gewährleistet werden.

Der Erfindung liegt die Aufgabe zugrunde, einen Drucksensor der eingangs genannten Art derart auszugestalten, dass bei Einfrieren des flüssigen Reduktionsmittels eine Beschädigung des Drucksensors, insbesondere der Drucksensormembran vermieden werden kann.

Diese Aufgabe wird durch die Merkmale des Patentanspruches 1 gelöst.

Die der Erfindung zugrundeliegende Idee beruht darin, den Drucksensor im Gehäuse der Membranpumpe anzuordnen und die Membranpumpe als Ausdehnungsgefäß zum Schutz des Drucksensors zu verwenden.

Die Drucksensormembran wird deshalb zur Vermeidung von Überdruck am Drucksensor direkt im Pumpenkopf, d.h. oberhalb der Membran der Membranpumpe angeordnet, so dass die beim Einfrieren des Reduktionsmittels innerhalb der Membranpumpe auftretende Volumenzunahme des Reduktionsmittels durch eine Auslenkung der Pumpenmembran entgegen der Kraft einer Feder aufgenommen wird und die Drucksensormembran vor Beschädigungen geschützt ist.

Weitere vorteilhafte Ausgestaltungen der Erfindung werden nachfolgend unter Bezugnahme auf die Zeichnung näher erläutert. Es zeigen:
- Figur 1: eine Blockdarstellung einer Brennkraftmaschine mit zugehöriger Abgasnachbehandlungsanlage, bei der die erfindungsgemäße Vorrichtung eingesetzt wird und
- Figur 2: einen Schnitt durch eine Membranpumpe mit integriertem Drucksensor.

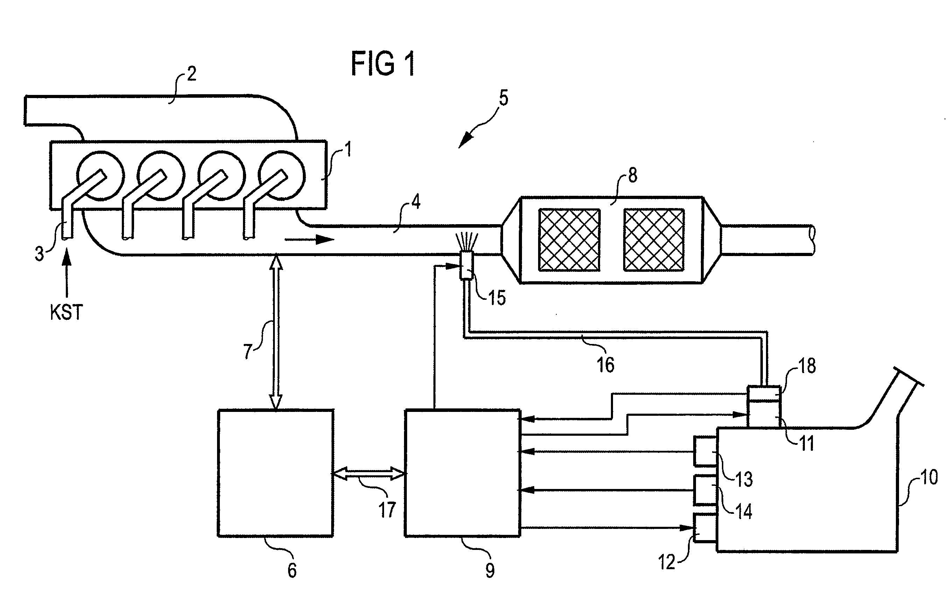

In Figur 1 ist in Form eines Blockschaltbildes sehr vereinfacht eine mit Luftüberschuss betriebene Brennkraftmaschine mit einer ihr zugeordneten Abgasnachbehandlungsanlage gezeigt. Dabei sind nur diejenigen Teile dargestellt, die für das Verständnis der Erfindung notwendig sind. Insbesondere ist auf die Darstellung des Kraftstoffkreislaufes verzichtet worden. In diesem Ausführungsbeispiel ist als Brennkraftmaschine eine Dieselbrennkraftmaschine gezeigt und als Reduktionsmittel zum Nachbehandeln des Abgases wird wässerige Harnstofflösung verwendet.

Der Brennkraftmaschine 1 wird über eine Ansaugleitung 2 die zur Verbrennung notwendige Luft zugeführt. Eine Einspritzanlage, die beispielsweise als Hochdruckspeichereinspritzanlage (Common rail) mit Einspritzventilen ausgebildet sein kann, die Kraftstoff KST direkt in die Zylinder der Brennkraftmaschine 1 einspritzen, ist mit dem Bezugszeichen 3 bezeichnet. Das Abgas der Brennkraftmaschine 1 strömt über eine Abgasleitung 4 zu einer Abgasnachbehandlungsanlage 5 und von diesem über einen nicht dargestellten Schalldämpfer ins Freie.

Zur Steuerung und Regelung der Brennkraftmaschine 1 ist ein an sich bekanntes Motorsteuergerät 6 über eine hier nur schematisch dargestellte Daten- und Steuerleitung 7 mit der Brennkraftmaschine 1 verbunden. Über diese Daten- und Steuerleitung 7 werden Signale von Sensoren (z.B. Temperatursensoren für Ansaugluft, Ladeluft, Kühlmittel, Lastsensor, Geschwindigkeitssensor) und Signale für Aktoren (z.B. Einspritzventile, Stellglieder) zwischen der Brennkraftmaschine 1 und dem Motorsteuergerät 6 übertragen.

Die Abgasnachbehandlungsanlage 5 weist einen Reduktionskatalysator 8 auf, der mehrere in Reihe geschaltete, nicht näher bezeichnete Katalysatoreinheiten beinhaltet. Stromabwärts und/oder stromaufwärts des Reduktionskatalysators 8 kann zusätzlich je ein Oxidationskatalysator angeordnet sein (nicht dargestellt). Ferner ist ein Dosiersteuergerät 9 vorgesehen, das einem Reduktionsmittelvorratsbehälter 10 mit einer elektrisch ansteuerbaren Reduktionsmittelpumpe 11 zum Fördern des Reduktionsmittels zugeordnet ist. Die Reduktionsmittelpumpe 11 ist als Membranpumpe ausgebildet.

Als Reduktionsmittel dient wässerige Harnstofflösung, die in dem Reduktionsmittelvorratsbehälter 10 gespeichert ist. Dieser weist eine elektrische Heizeinrichtung 12 und Sensoren 13,14 auf, welche die Temperatur der Harnstofflösung bzw. den Füllstand im Reduktionsmittelvorratsbehälter 10 erfassen. An das Dosiersteuergerät 9 werden außerdem noch die Signale eines stromaufwärts des Reduktionskatalysators 8 angeordneten Temperatursensors und eines stromabwärts des Reduktionskatalysators 8 angeordneten Abgasmessaufnehmers, z.B. eines NOx-Sensors übergeben (nicht dargestellt).

Das Dosiersteuergerät 9 steuert ein elektromagnetisches Dosierventil 15 an, dem bedarfsgerecht über eine Zuführungsleitung 16 Harnstofflösung mit Hilfe der Reduktionsmittelpumpe 11 aus dem Reduktionsmittelvorratsbehälter 10 zugeführt wird. In der Reduktionsmittelpumpe 11 ist ein Drucksensor 18 integriert, der den Druck im Dosiersystem erfasst und ein entsprechendes Signal an das Dosiersteuergerät 9 abgibt. Die Einspritzung der Harnstofflösung mittels des Dosierventiles 15 erfolgt in die Abgasleitung 4 stromaufwärts des Reduktionskatalysators 8.

Im Betrieb der Brennkraftmaschine 1 strömt das Abgas in der eingezeichneten Pfeilrichtung durch die Abgasleitung 4.

Das Dosiersteuergerät 9 ist zum gegenseitigen Datentransfer über ein elektrisches Bussystem 17 mit dem Motorsteuergerät 6 verbunden. Über das Bussystem 17 werden die zur Berechnung der zu dosierenden Menge an Harnstofflösung relevanten Betriebsparameter, wie z.B. Maschinendrehzahl, Luftmasse, Kraftstoffmasse, Regelweg einer Einspritzpumpe, Abgasmassenstrom, Betriebstemperatur, Ladelufttemperatur, Spritzbeginn usw. dem Dosiersteuergerät 9 übergeben.

Ausgehend von diesen Parametern und den Messwerten für die Abgastemperatur und dem NOx-Gehalt berechnet das Dosiersteuergerät 9 die einzuspritzende Menge an Harnstofflösung und gibt über eine nicht näher bezeichnete elektrische Verbindungsleitung ein entsprechendes elektrisches Signal an das Dosierventil 15 ab. Durch die Einspritzung in die Abgasleitung 4 wird der Harnstoff hydrolysiert und durchmischt. In den Katalysatoreinheiten erfolgt die katalytische Reduktion des NOx im Abgas zu N₂ und H₂O.

Das Dosierventil 15 zum Einbringen der Harnstofflösung in die Abgasleitung 4 entspricht weitgehend einem üblichen Niederdruck-Benzineinspritzventil, das z.B. in eine mit Wandung der Abgasleitung 4 fest verbundenen Ventilaufnahmevorrichtung lösbar befestigt ist.

Das Dosiersteuergerät 9 ist vorzugsweise unmittelbar an dem Reduktionsmittelvorratsbehälter 10 angebracht und bildet mit diesem eine bauliche Einheit.

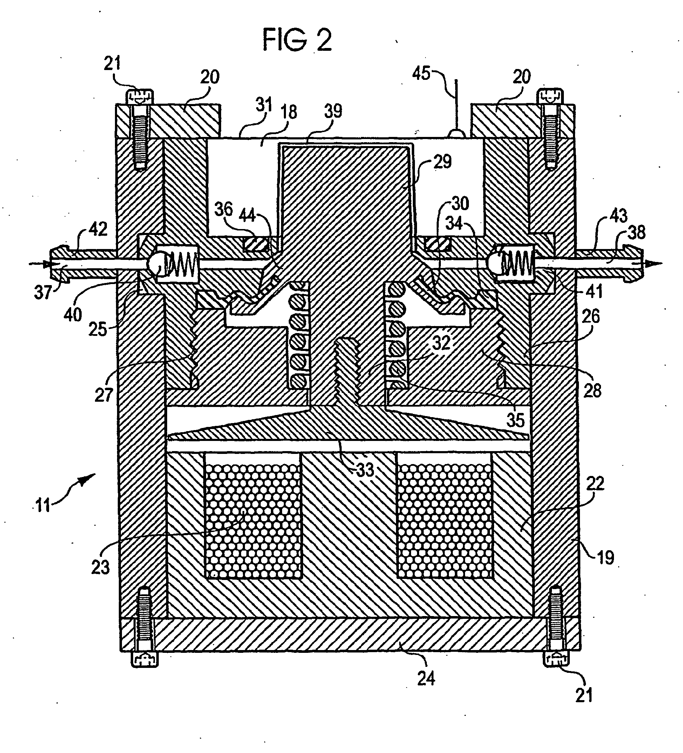

In Figur 2 ist die als Membranpumpe ausgebildete Reduktionsmittelpumpe 11 mit dem integrierten Drucksensor 18 in Form einer Schnittdarstellung näher gezeigt.

Die Membranpumpe und der Drucksensor sind in einem gemeinsamen, mehrteiligen Gehäuse untergebracht, das aus einem hohlzylinderförmig gestalteten Gehäuseteil 19, einem Gehäuseboden 24 und einem kreisringförmig gestalteten Gehäusedeckel 20 besteht. Das Gehäuseteil 19, der Gehäuseboden 24 und der Gehäusedeckel 20 sind mittels nur schematisch dargestellter Schraubverbindungen 21 miteinander lösbar verbunden. Auf dem Gehäuseboden 24 ist ein Elektromagnet, bestehend aus einem topfförmigen Eisenkern 22 und einer darin angeordneten elektrischen Wicklung 23 vorgesehen. Die Wicklung wird über elektrische Leitungen (nicht dargestellt) mittels elektrischer Impulse vom Dosiersteuergerät 9 (Fig.1) angesteuert.

Das Gehäuseteil 19 weist bezogen auf seine Längserstreckung in der oberen, dem Gehäusedeckel 21 zugewandten Hälfte an seiner Innenfläche eine radial umlaufende Nut 25 auf, in die nach dem Zusammenbau der Membranpumpe ein entsprechend ausgeformter Vorsprung eines Pumpenoberteils 26 zu liegen kommt, so dass das Pumpenoberteil 26 bezüglich seiner axialen Richtung fixiert ist. Das Pumpenoberteil 26 weist an seinem, dem Gehäuseboden 24 zugewandten freien Ende ein Gewinde 27 auf, das mit dem Gewinde eines Führungsteils 28 zusammenwirkt. Die Membranpumpe umfasst ferner einen zentralen Stützkörper 29 aus einem Material mit geringem spezifischem Gewicht, beispielsweise Kunststoff, der sich in axialer Richtung erstreckt und an seinem, dem Gehäusedeckel 20 zugewandten freien Ende in eine topfförmige Ausnehmung des Drucksensors 18 hineinragt. Der Drucksensor 18 weist eine Drucksensormembran 31 auf, auf der ein Widerstandsnetzwerk vorzugsweise in Dickschichttechnologie aufgebracht ist, welches die Sensor- und Kalibrierwiderstände enthält. Das Messprinzip basiert auf dem Effekt der Widerstandsänderung bei mechanischer Verspannung der Drucksensormembran (Piezoresistivität). Zur Kompensation von Temperaturabhängigkeiten können zusätzliche temperaturabhängige Widerstände vorgesehen sein.

Das Widerstandsnetzwerk und die temperaturabhängigen Widerstände werden über Anschlusspins und elektrische Anschlussleitungen 45 mit einer Auswerteelektronik, die vorzugsweise in dem Dosiersteuergerät 9 integriert ist, verbunden.

An der, dem Gehäuseboden zugewandten Seite weist der zentrale Stützkörper 29 einen Antriebsschaft 32 auf, an dessen Stirnseite eine Ankerplatte 33 aus ferromagnetischem Material befestigt ist und die von dem aus Eisenkern 22 und elektrischer Wicklung 23 bestehenden Elektromagneten bewegt werden kann. Die Verbindung zwischen Antriebsschaft 32 und Ankerplatte 33 kann durch Kleben, Schweißen, Pressen oder wie in der Figur angedeutet, durch Verschrauben erfolgen.

Der Stützkörper 29 weist einen Flansch 44 auf, in den die Pumpenmembran 30 eingespritzt oder eingepresst ist. Der Stützkörper 29 leitet somit die Antriebskräfte in die Pumpenmembran 30 ein und verdrängt unerwünschtes Totvolumen im Membranvolumen, insbesondere wird der zylindrische Hohlraum im topfförmigen Drucksensorelement 31 weitgehend ausgefüllt.

Die Pumpenmembran 30 wird mit ihrem äußeren Rand im Pumpenoberteil 26 mittels eines an ihr angeformten Dichtringes 34 abgedichtet. Dazu wird über das einschraubbare Führungsteil 28 eine axiale Vorspannung erzeugt. Das Führungsteil 28 übernimmt zudem die Führung des Antriebsschaftes 32 und einer Schraubenfeder 35, welche sich einerseits an einem Bund des Führungsteils 28 und anderseits an einem Bund des zentralen Stützkörpers 29 abstützt, so dass sich bei nicht erregtem Elektromagneten durch die Vorspannung der Schraubenfeder 35 der zentrale Stützkörper 29 in seiner Ruhestellung befindet. Mittels der Gehäuseteile 19, 20, 21 wird das Drucksensorelement 31 in das Pumpenoberteil 26 gedrückt, wobei eine O-Ringdichtung 36 die geeignete Vorspannung zur Abdichtung erhält.

Zum Zuführen und Abführen des Reduktionsmittels sind in Höhe der umlaufenden Nut 25 des zylindrischen Gehäuseteiles 19 Kanäle 37, 38 vorgesehen, die durch das Gehäuseteil 19 und das Pumpenoberteil 26 in Richtung zu dem oberhalb der Pumpenmembran 30 liegenden zentralen Stützkörper 29 führen. Die Kanäle 37, 38 stehen über den Spalt 39 zwischen Drucksensorelement 31 und zentralem Stützkörper 29 in Fließverbindung.

Im Verlauf der Kanäle 37, 38 innerhalb des Pumpenoberteils 26 sind nicht näher bezeichnete Kammern vorgesehen, in denen Rückschlagventile 40, 41 angeordnet sind. Diese Rückschlagventile 40, 41 bestehen in herkömmlicher Weise aus je einer Kugel und einer je einem auf die Kugel einwirkenden Federelement, so dass der jeweilige Kanal unter dem Einfluss der Bewegung der Pumpenmembran 30 geöffnet oder geschlossen wird.

Außerhalb des Gehäuseteils 19 enden die Kanäle 37, 38 in Anschlussstücke 42, auf denen Schlauchleitungen aufgesteckt werden, wobei die eine Schlauchleitung über ein Filter zu dem Reduktionsmittelvorratsbehälter und die andere Schlauchleitung zu dem Dosierventil führt. Die Fließrichtung des Reduktionsmittels durch die Membranpumpe ist in der Figur mit Pfeilsymbolen eingezeichnet.

Im folgenden wird die Funktion der Membranpumpe mit dem integrierten Drucksensor erläutert.

Mit einem Stromimpuls von definierter Länge wird die Ankerplatte 33 und über den Antriebsschaft 32 der zentrale Stützkörper 29 gegen die Kraft der Schraubenfeder 35 vom Elektromagneten 22, 23 angezogen. Dadurch vergrößert sich das Volumen oberhalb der Pumpenmembran 30 und über das Anschlussstück 42, den Kanal 37 und das als Rückschlagventil ausgestaltete Einlassventil 40 wird Reduktionsmittel in das Pumpenoberteil 26 gesogen. Nach dem Abklingen des Magnetfeldes im Elektromagneten 22, 23 drückt die Schraubenfeder 35 den zentralen Stützkörper 29 wieder nach oben und drückt somit Reduktionsmittel über das als Rückschlagventil ausgebildete Auslassventil 41 über den Kanal 38 und das Anschlussstück 43 in die Reduktionsmittelleitung in Richtung zum Dosierventil (Fig.1).

Mittels des Drucksensors 18 kann der Druck im Pumpenoberteil 26 von einem im Dosiersteuergerät enthaltenen Steuerrechner zu jeder Phase des Pumpzyklusses gemessen werden. Mit den elektrischen Anschlussleitungen 45 ist der Drucksensor mit dem Dosiersteuergerät verbunden.

Friert das Reduktionsmitteldosiersystem ein, verhindert das Auslassventil 41, dass während des Einfrierens des Reduktionsmittels im Schlauch ein Überdruck im Pumpenoberteil 26 entstehen kann. Friert dann auch noch die Reduktionsmittelpumpe ein, wird die Zunahme des eingeschlossenen Reduktionsmittelvolumens durch Ausweichen des zentralen Stützkörpers 29 gegen die Kraft der Schraubenfeder 35 aufgefangen, der Druck wird somit auf einen über die Pumpenfederkraft definierten Maximalwert begrenzt. Dieser Maximalwert liegt mit großer Sicherheitsreserve unterhalb des Berstdrucks des Drucksensors. Die Kraft der Schraubenfeder 35 wird nämlich sinnvollerweise so dimensioniert, dass der benötigte Systemdruck zuverlässig erreicht wird, aber nicht wesentlich überschritten wird, da dies unnötig hohe Anforderungen an die Dimensionierung des Elektromagneten 22, 23 und an den elektrischen Strombedarf stellen würde.

Zum Auftauen der Reduktionsmittelpumpe wird die elektrische Wicklung 23 bestromt. Dadurch erwärmt sich der Elektromagnet. Durch die Ausführung des Pumpengehäuses, bestehend aus Gehäuseteil 19, Gehäuseboden 24 und Gehäusedeckel 20 aus gut wärmeleitendem Werkstoff, beispielsweise Aluminium und aufgrund der kompakten Bauform der Membranpumpe wird über das Pumpengehäuse die gesamte Membranpumpe erwärmt und das eingeschlossene Reduktionsmittelvolumen geschmolzen. Der Strom wird dabei vom Steuerrechner des Dosiersteuergerätes auf einen Wert geregelt, welcher unterhalb des Anzugsstroms des Elektromagneten liegt. Somit ist sichergestellt, dass selbst mehrere Heizimpulse, bei bereits wieder funktionsfähiger Membranpumpe zu keiner ungewollten Druckerhöhung führen. Da vorzugsweise die Drucksensormembran 31 über eine eigene Heizung verfügt, wie es beispielsweise aus der WO 01/06098 A1 bekannt ist, ist ausreichend schnell ein Drucksignal verfügbar, über welches der Steuerrechner feststellen kann, ob das Reduktionsmitteldosiersystem und insbesondere die Pumpe wieder funktionsfähig ist.

Bei dieser Anordnung entsteht bei einer Druckmessung in der Pumpphase aufgrund des Widerstandes des Auslassventils ein Druckoffset. Da die Schließkraft des Auslassventils zur Optimierung der Selbstentlüftungsfähigkeit der Membranpumpe minimiert ist, ist dieser Offset bei niedriger Strömungsgeschwindigkeit gegen Ende des Pumpenhubs klein gegenüber dem Messwert. Da außerdem die Druckregelung bei dem beschriebenen Harnstoff-SCR-System von der Steuereinheit übernommen wird, kann die Messung zeitlich mit dem Pumpenansteuertakt synchronisiert werden und der Offset bei der Druckregelung berücksichtigt werden.

Durch die Anordnung des Drucksensors in der Membranpumpe ergeben sich zusätzliche Diagnosemöglichkeiten. Durch Druckmessung im Ansaugtakt kann bei zu geringer Förderleistung unterschieden werden, ob der Zulauf einen zu hohen Strömungswiderstand aufweist, wegen fehlerhafter Belüftung Unterdruck im Reduktionsmittelvorratsbehälter vorliegt oder ob wegen Reduktionsmittelmangel Luft angesaugt wird.

## Patentansprüche

1. Membranpumpe zum Fördern von flüssigem Reduktionsmittel zu einer Abgasnachbehandlungsanlage einer Brennkraftmaschine mit
- einem Pumpengehäuse (19,20,24), auf dessen Boden (24) ein Elektromagnet (22,23) angeordnet ist,
- einer Pumpenmembran (30), welche einerseits fest mit dem Pumpengehäuse (19,20,24) und anderseits an einem zentralen Stützkörper (29) befestigt ist und welche mittels Ansteuerung des Elektromagneten (22,23) entgegen der Kraft einer Feder (35) über den zentralen Stützkörper (29) zwischen zwei Endstellungen hin- und herbewegbar ist,
- einem Einlasskanal (37) zum Zuführen des Reduktionsmittels oberhalb der Pumpenmembran (30), der ein als Rückschlagventil ausgebildetes Einlassventil (40) aufweist,
- einem Auslasskanal (38) zum Abführen des Reduktionsmittels, der ein als Rückschlagventil ausgebildetes Auslassventil (41) aufweist, und
- in dem Pumpengehäuse (19,20,24) oberhalb der Pumpenmembran (30) eine den Druck des Reduktionsmittels erfassende Drucksensormembran (31) eines Drucksensor (18), die derart abgeordnet ist, dass die beim Einfrieren des Reduktionsmittels innerhalb der Membranpumpe auftretende Volumenzunahme des Reduktionsmittels durch eine Auslenkung der Pumpenmembran (30) entgegen der Kraft der Feder (35) aufgenommen wird.

2. Membranpumpe nach Anspruch 1, **dadurch gekennzeichnet, dass** der zentrale Stützkörper (29) an seinem, dem Elektromagneten (22,23) zugewandtem Ende einen Antriebsschaft (32) aufweist, an dessen Stirnseite einer Ankerplatte (33) für den Elektromagneten (22,23) angeordnet ist.

3. Membranpumpe nach Anspruch 2, **dadurch gekennzeichnet, dass** die Verbindung der Ankerplatte (33) mit dem Antriebsschaft (32) durch Verkleben, Verschweißen, Verpressen oder Verschrauben hergestellt ist.

4. Membranpumpe nach Anspruch 1, **dadurch gekennzeichnet, dass** der zentrale Stützkörper (29) an seinem, dem Elektromagneten (22,23) abgewandten Ende eine zylindrische Gestalt aufweist und in eine topfförmige Ausnehmung des Drucksensors (18) hineinragt, so dass dort zwischen der Ausnehmung und der Oberfläche des Stützkörpers ein Spalt gebildet ist, der den Einlasskanal (37) mit dem Auslasskanal (38) verbindet.

5. Membranpumpe nach Anspruch 1, **dadurch gekennzeichnet, dass** die Pumpenmembran (30) einerseits an einem Flansch (44) des Stützkörpers (29) und anderseits fest mit dem Gehäuse der Membranpumpe verbunden ist.

6. Membranpumpe nach Anspruch 1, **dadurch gekennzeichnet, dass** das Gehäuse (19,20,24) aus einem metallischen Werkstoff hoher Wärmeleitungsfähigkeit besteht.

7. Membranpumpe nach Anspruch 6, **dadurch gekennzeichnet, dass** das Gehäuse (19,20,24) aus Aluminium besteht.

## Claims

1. Diaphragm pump for conveying liquid reducing agent to an exhaust gas after-treatment system of an internal combustion engine, having
- a pump housing (19, 20, 24), arranged on the base (24) of which there is an electromagnet (22, 23),
- a pump diaphragm (30), which, on the one hand, is fixedly secured to the pump housing (19, 20, 24) and, on the other hand, is secured to a central support body (29) and which can be moved to and fro between two end positions by means of activation of the electromagnet (22, 23) in opposition to the force of a spring (35) by way of the central support body (29),
- an inlet channel (37) for supplying the reducing agent above the pump diaphragm (30) that has an inlet valve (40) formed as a non-return valve,
- an outlet channel (38) for discharging the reducing agent that has an outlet valve (41) formed as a non-return valve, and
- in the pump housing (19, 20, 24) above the pump diaphragm (30) a pressure-sensor diaphragm (31) of a pressure sensor (18) that detects the pressure of the reducing agent and is arranged in such a way that the increase in volume of the reducing agent that occurs in the event of freezing of the reducing agent within the diaphragm pump is absorbed by a deflection of the pump diaphragm (30) in opposition to the force of the spring (35).

2. Diaphragm pump according to claim 1, **characterised in that** the central support body (29) has at its end that faces the electromagnet (22, 23) a drive shaft (32), arranged on the end face of which there is an anchor plate (33) for the electromagnet (22, 23).

3. Diaphragm pump according to claim 2, **characterised in that** the connection of the anchor plate (33) to the drive shaft (32) is established by gluing, welding, pressing or screwing.

4. Diaphragm pump according to claim 1, **characterised in that** the central support body (29) has a cylindrical form at its end that is remote from the electromagnet (22, 23) and projects into a pot-shaped recess of the pressure sensor (18) so that a gap connecting the inlet channel (37) to the outlet channel (38) is formed there between the recess and the surface of the support body.

5. Diaphragm pump according to claim 1, **characterised in that** the pump diaphragm (30), on the one hand, is connected to a flange (44) of the support body (29) and, on the other hand, is fixedly connected to the housing of the diaphragm pump.

6. Diaphragm pump according to claim 1, **characterised in that** the housing (19, 20, 24) consists of a metallic material of high thermal conductivity.

7. Diaphragm pump according to claim 6, **characterised in that** the housing (19, 20, 24) consists of aluminium.

## Revendications

1. Pompe à membrane pour véhiculer de l'agent réducteur liquide à une installation de post-traitement de gaz d'échappement d'un moteur à combustion interne, comprenant
- un corps (19, 20, 24) de pompe, sur le fond (24) duquel est monté un électro-aimant (22, 23),
- une membrane (30) de pompe, qui est fixée d'un côté solidement au corps (19, 20, 24) de pompe et de l'autre côté à une pièce (29) centrale d'appui et qui peut aller et venir entre deux positions d'extrémité au moyen d'une commande de l'électro-aimant (22, 23) à l'encontre de la force d'un ressort (35), au-dessus de la buse (29) centrale d'appui,
- un canal (37) d'entrée pour l'apport de l'agent réducteur, au-dessus de la membrane (30) de pompe, qui a une vanne (40) d'entrée constituée sous la forme d'un clapet anti-retour,
- un canal (38) de sortie pour l'évacuation de l'agent réducteur qui a une vanne (41) de sortie constituée sous la forme d'un clapet anti-retour , et
- dans le corps (19, 20, 24) de pompe, au-dessus de la membrane (30) de pompe, une membrane (31) d'un capteur (18) de pression, membrane (31) qui détecte la pression de l'agent réducteur et qui est disposé de façon à absorber, par une excursion de la membrane (30) de pompe à l'encontre de la force du ressort (35), l'augmentation du volume, se produisant à l'intérieur de la pompe à membrane, de l'agent réducteur.

2. Pompe à membrane suivant la revendication 1, **caractérisée en ce que** la pièce (29) centrale d'appui a sur son extrémité tournée vers l'électro-aimant (22, 23) un arbre (32) d'entraînement, sur le côté frontal duquel est montée une plaque (33) d'ancrage de l'électro-aimant (22, 23).

3. Pompe à membrane suivant la revendication 2, **caractérisée en ce que** la liaison de la plaque (33) d'ancrage à l'arbre (32) d'entraînement est ménagée par collage, soudage, compression ou vissage.

4. Pompe à membrane suivant la revendication 1, **caractérisé en ce que** la pièce (29) centrale d'appui a sur son extrémité éloignée de l'électro-aimant (22, 23) une forme cylindrique et pénètre dans une cavité en forme de pot du capteur (18) de pression de manière à y former entre la cavité et la surface de la pièce d'appui, un intervalle qui met le canal (37) d'entrée en communication avec le canal (38) de sortie.

5. Pompe à membrane suivant la revendication 1, **caractérisée en ce que** la membrane (30) de pompe est reliée d'un côté à une bride (44) de la pièce (29) d'appui et de l'autre côté est reliée solidement au corps (2) de la pompe à membrane.

6. Pompe à membrane suivant la revendication 1, **caractérisée en ce que** le corps (19, 20, 24) est en un matériau métallique ayant une grande conductivité de la chaleur.

7. Pompe à membrane suivant la revendication 6, **caractérisée, en ce que** le corps (19, 20,24) est en aluminium.
